# NEUE EUROPÄISCHE PATENTSCHRIFT

(11) **EP 1 784 901 B2**
(45) Veröffentlichungstag und Bekanntmachung des Hinweises auf die Entscheidung über den Einspruch: **16.02.2022**
(45) Hinweis auf die Patenterteilung: 28.06.2017
(21) Anmeldenummer: 05760035.5
(22) Anmeldetag: 08.07.2005
(51) Int. Cl.: H02G 11/00, B25J 19/00, B05B 13/04, B25J 5/02, B05B 16/40

(54) **VORRICHTUNG ZUM BESCHICHTEN, INSBESONDERE ZUM LACKIEREN, VON GEGENSTÄNDEN, INSBESONDERE VON FAHRZEUGKAROSSERIEN**
DEVICE FOR COATING, IN PARTICULAR FOR PAINTING OBJECTS, IN PARTICULAR VEHICLE BODIES
PROCEDE POUR RECOUVRIR EN PARTICULIER POUR PEINDRE DES ARTICLES, EN PARTICULIER DES CARROSSERIES DE VEHICULES

(30) Priorität: 19.08.2004 DE 102004040162
(43) Veröffentlichungstag der Anmeldung: 16.05.2007
(73) Patentinhaber: b+m surface systems GmbH, 36132 Eiterfeld (DE)
(72) Erfinder: ALBRECHT, Markus, 74232 Abstatt (DE); SOTZNY, Steffen, 71720 Oberstenfeld (DE); PYTKOWJAT, Michael, 74379 Ingersheim (DE)
(74) Vertreter: Ostertag & Partner Patentanwälte mbB
(86) Internationale Anmeldenummer: PCT/EP2005/007390
(87) Internationale Veröffentlichungsnummer: WO 2006/021264

(56) Entgegenhaltungen:
- EP-A- 1 445 233
- EP-A1- 0 192 338
- EP-A1- 0 745 429
- EP-A1- 1 432 094
- EP-A1- 1 445 233
- EP-A1- 1 609 532
- EP-A2- 1 152 510
- EP-B1- 0 544 051
- EP-B1- 0 725 228
- EP-B1- 1 104 589
- WO-A1-01/68267
- WO-A1-2004/037430
- WO-A1-2004/037436
- DE-A1- 10 149 424
- DE-A1- 10 348 877
- DE-A1- 19 649 538
- DE-A1- 19 838 805
- DE-B3-102004 030 858
- DE-T2- 69 403 130
- DE-U1- 9 410 394
- DE-U1- 20 119 289
- DE-U1- 20 119 289
- DE-U1- 29 809 829
- DE-U1- 29 809 829
- DE-U1- 29 814 293
- GB-A- 1 249 018
- JP-A- H1 028 310
- JP-A- H02 303 792
- JP-A- H03 232 561
- JP-A- H07 107 650
- US-A- 4 498 414
- US-A- 5 014 644
- US-A- 5 336 321
- US-A- 5 500 045
- PATENT ABSTRACTS OF JAPAN Bd. 015, Nr. 085 (M-1087), 27. Februar 1991 (1991-02-27) -& JP 02 303792 A (MITSUBISHI ELECTRIC CORP), 17. Dezember 1990 (1990-12-17)
- "CABLE CARRIERS PICK UP THE SLACK" MACHINE DESIGN, PENTON/IPC, CLEVELAND, US, Bd. 63, Nr. 22, 7. November 1991 (1991-11-07), Seiten 70-73, XP000274171 ISSN: 0024-9114
- PATENT ABSTRACTS OF JAPAN Bd. 1995, Nr. 07, 31. August 1995 (1995-08-31) -& JP 07 107650 A (TOYOTA MOTOR CORP), 21. April 1995 (1995-04-21)
- "CABLE CARRIERS PICK UP THE SLACK", MACHINE DESIGN, PENTON MEDIA, CLEVELAND, OH, US, vol. 63, no. 22, 7 November 1991 (1991-11-07), pages 70-73, XP000274171, ISSN: 0024-9114

## Beschreibung

Die Erfindung betrifft eine Vorrichtung gemäß Anspruch 1 zum Beschichten, insbesondere zum Lackieren, von Gegenständen, insbesondere von Fahrzeugkarosserien.

Zum vollautomatischen Lackieren aber auch sonstigen Beschichten von Gegenständen, wie z. B. Fahrzeugkarosserien, werden mehrachsige Roboter eingesetzt, die eine Applikationseinrichtung für das Beschichtungsmedium, beispielsweise eine Lackspritzpistole, führen. Durch ihre Mehrachsigkeit gelingt es, der Kontur des zu beschichtenden Gegenstandes genau zu folgen und dabei bestimmte Kriterien einzuhalten. Zu diesen Kriterien gehört die Wahrung eines bestimmten Abstandes zum zu beschichtenden Gegenstand und die Orientierung des Sprüstrahles, etwa in der Weise, daß dieser immer etwa senkrecht auf die zu beschichtende Oberfläche auftrifft.

Die Applikationseinrichtung, der Roboter und der den Roboter tragenden Schlitten, also die verfahrbaren Komponenten der Beschichtungsvorrichtung, müssen über eine Vielzahl von Leitungen mit ortsfesten Anschlüssen verbunden werden. Bei diesen Leitungen kann es sich um elektrische handeln, insbesondere solche, die elektrische Betriebsspannungen oder elektrische Steuersignale führen. Ein anderer Teil der Leitungen dient dazu, gasförmige, pulverförmige oder flüssige Medien zum Schlitten, zum Roboter oder ggf. auch zur Applikationseinrichtung zu transportieren. Bei diesen Medien handelt es sich insbesondere um Druckluft, Farben und Lösemittel. Die Anzahl von derartigen Leitungen, die in modernen Beschichtungsvorrichtungen der eingangs genannten Art Verwendung finden, steigt mit wachsender Komplexität dieser Vorrichtungen ständig. Um sie ordentlich führen zu können, werden sog. Medienführungsketten eingesetzt, an denen die einzelnen Leitungen befestigt sind, so daß sie sich bei der Bewegung des Schlittens in eine ordentliche Schleife legen. Aufgrund der großen Anzahl von Leitungen sind bei bekannten Vorrichtungen der eingangs genannten Art die Medienführungsketten sehr breit, was sich in einer entsprechenden Verbreiterung der Gesamtabmessungen der Vorrichtungen niederschlägt. Applikationsanlagen sind aus DE19649538 oder DE19649538 bekannt. DE19649538 offenbart ein Industrieroboter. Aufgabe der vorliegenden Erfindung ist es, eine Vorrichtung der eingangs genannten Art so auszugestalten, daß ihr Platzbedarf insbesondere in Richtung senkrecht zur Transportrichtung reduziert ist.

Diese Aufgabe wird dadurch gelöst, daß
j) die zwei Medienführungsketten ineinander verschachtelt sind;
   oder
k) eine der zwei Medienführungsketten mit beiden Trums oberhalb beider Trums der anderen der zwei Medienführungsketten angeordnet ist.

Erfindungsgemäß wird also die Gesamtzahl aller elektrischer oder medienführender Leitungen in mindestens zwei Gruppen aufgeteilt, denen jeweils eine Medienführungskette zugeordnet ist. Diese Medienführungsketten werden nun so geführt, daß ihre Trums übereinander angeordnet sind. In Richtung der Vertikalen steht im allgemeinen ausreichend Platz zur Verfügung, so daß insbesondere die Grundfläche, die von der Vorrichtung eingenommen wird und im allgemeinen knapp ist, kleingehalten werden kann.

Mindestens zwei Medienführungsketten sind dem den Roboter tragenden Schlitten zugeordnet, von denen eine die Medienführungskette gemäß Anspruch 1, Merkmal f) ist. Dieses Merkmal der Erfindung wird dort eingesetzt, wo ein und demselben Schlitten bzw. dem von diesem mitgeführten Roboter und der vom Roboter getragenen Applikationseinrichtung eine besonders große Anzahl von Leitungen zugeführt werden muß. Mindestens zwei Medienführungsketten sind unterschiedlichen Schlitten zugeordnet. Diese Ausführungsform findet dort Anwendung, wo sich die große Zahl von Leitungen dadurch ergibt, daß im wesentlichen in demselben Raum mehrere Schlitten bewegt werden müssen.

So kommt es bei vielen kapazitätsstarken Vorrichtungen der eingangs genannten Art vor, daß zwei Schlitten jeweils einen eine Applikationseinrichtung tragenden Roboter tragen. Häufig tritt auch der Fall ein, daß mindestens einer der Schlitten einen sog. "Handhabungsroboter" trägt. Dieser dient bei dem Lackiervorgang beispielsweise dazu, bestimmte Teile an dem zu lackierenden Gegenstand, so etwa die Türen einer Fahrzeugkarosserie, zu bewegen, um alle Flächen dieser Teile mit dem Beschichtungsmedium gut erreichen zu können.

Die zwei Medienführungsketten, deren Trums übereinander angeordnet sind, können ineinander verschachtelt sein. Dies bedeutet, daß die beiden Trums der einen Kette innerhalb der beiden Trums einer anderen Kette liegen und die erstgenannte Kette eine Schleife mit kleinerem Krümmungsradius als die zweitgenannte Kette bildet.

Alternativ ist es möglich, daß mindestens eine Medienführungskette mit beiden Trums oberhalb der beiden Trums einer anderen Medienführungskette angeordnet ist.

Bei einer besonders zweckmäßigen Ausführungsform der Erfindung liegen benachbarte Trums der beiden Medienführungsketten zumindest bereichsweise aneinander. Dadurch wird nicht nur in vertikaler Richtung Platz gespart; darüber hinaus führen sich die beiden bereichsweise aneinanderliegenden Medienführungsketten gegenseitig.

Ausführungsbeispiele der Erfindung werden nachstehend anhand der Zeichnung näher erläutert; es zeigen
- Figur 1: einen Teilschnitt durch eine Lackspritzkabine zum Lackieren von Fahrzeugkarosserien;
- Figur 2: eine Seitenansicht der Lackspritzkabine von Figur 1, von außen gesehen;
- Figuren 3 bis 7: Seitenansichten alternativer Ausführungsbeispiele von Lackspritzkabinen,
wobei Figuren 2 bis 5 nicht zur Erfindung gehören.

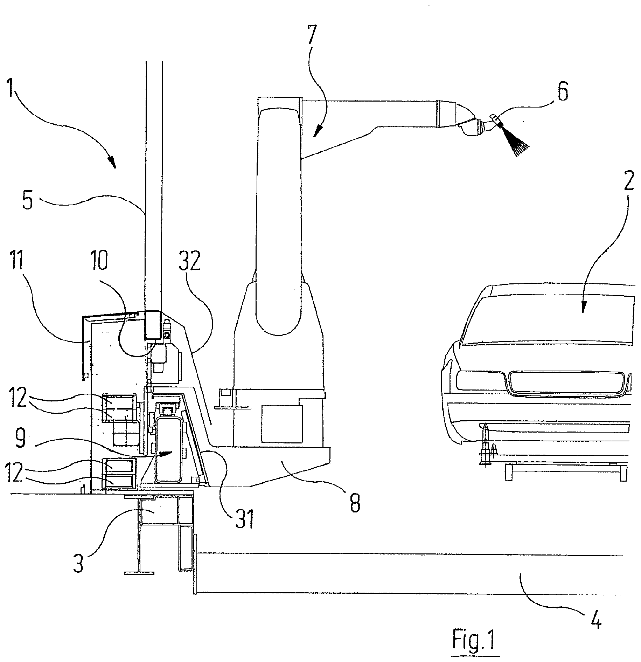

In Figur 1 ist ein Teil einer Lackspritzkabine, wie sie zum Lackieren von Fahrzeugkarosserien 2 eingesetzt wird, insgesamt mit dem Bezugszeichen 1 gekennzeichnet. Sie wird von einem Stahlbau getragen, von dem in der Zeichnung ein Horizontalträger 3 erkennbar ist. Die Lackspritzkabine 1 wird nach unten durch eine hier nicht näher interessierende Bodenstruktur 4, zu beiden Seiten hin jeweils durch Seitenwände 5, die transparent sein können, und nach oben durch eine nicht dargestellte, ebenfalls nicht interessierende Deckenstruktur begrenzt. Die Fahrzeugkarosserien 2 werden in Richtung senkrecht zur Zeichenebene der Figur durch ein nicht gezeigtes Fördersystem kontinuierlich oder intermittierend hindurchbewegt, während sie in nachfolgend beschriebener Weise lackiert werden.

Die Lackierung der Fahrzeugkarosserien 2 erfolgt mit Hilfe einer Spritzpistole 6, die von einem sechsachsigen, insgesamt mit dem Bezugszeichen 7 versehenen Roboter geführt wird. Der Roboter 7 seinerseits ist auf einem Schlitten 8 montiert, der entlang einer weiter unten näher erläuterten Führungsstruktur 9 parallel zur Bewegungsrichtung der Fahrzeugkarosserien 2, also entlang der benachbarten Seitenwand 5, verfahrbar ist.

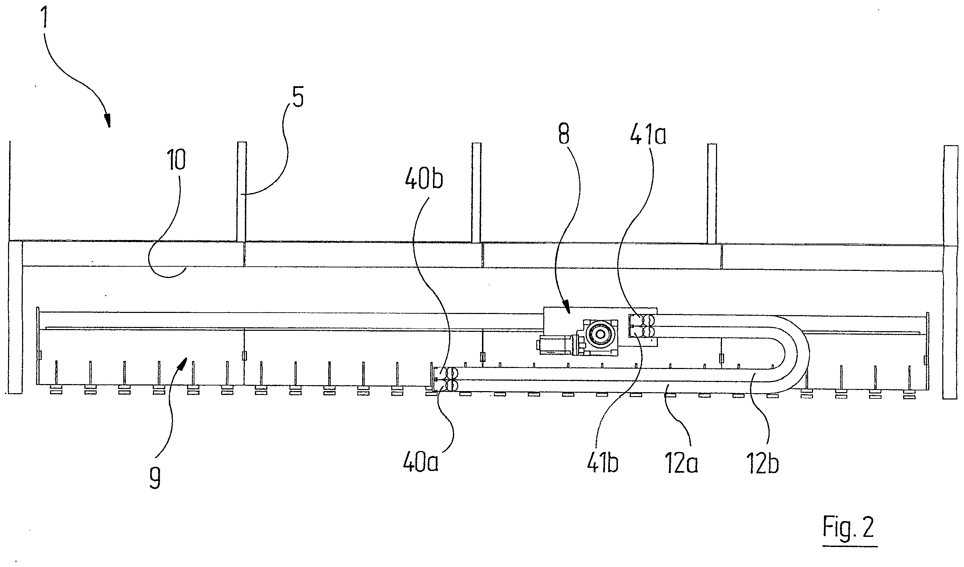

An den unteren Bereich beider Seitenwände 5 ist, mit dem Innenraum der Lackspritzkabine 1 über einen breiten, spaltartigen Zugang 10 verbunden, ein Nebengehäuse 11 angesetzt, in dem verschiedene zur Versorgung und zum Betrieb des Schlittens 8 sowie des Roboters 7 erforderliche Komponenten untergebracht sind. Bei diesen Komponenten handelt es sich insbesondere um nicht eingezeichnete elektrische und pneumatische Steuerungen, Ventile, elektrische Leitungen und Versorgungsleitungen zur Zufuhr von Farbe und Preßluft sowie um zwei Medienführungsketten 12a, 12b. An ihnen sind die verschiedenen elektrischen und medienführenden Verbindungsleitungen gehalten, die in einer Schleife von einem ortsfesten Anschlußpunkt 40a, 40b im Bereich des Nebengehäuses 11 zu einem mit dem Schlitten 8 mitgeführten Anschlußpunkt 41a, 41b geführt sind (vgl. Figur 2).

Die ortsfesten Anschlußpunkte 40a, 40b befinden sich etwa in der Mitte der Längserstreckung der Farbspritzkabine 1. Dort erfolgt, wie der Name "Anschlußpunkt" sagt, die Verbindung zwischen den ortsfesten, ggf. starren elektrischen und medienführenden Leitungen zu den in jedem Falle flexiblen elektrischen und medienführenden Verbindungsleitungen, die von den Medienführungsketten 12a, 12b gehalten und geordnet werden. In entsprechender Weise sind an den vom Schlitten 8 mitgeführten Anschlußpunkten 41a und 41b die von den Medienführungsketten 12a, 12b gehaltenen elektrischen und medienführenden Verbindungsleitungen mit entsprechenden Leitungen verbunden, die zu den mit dem Schlitten 8 mitbewegten Verbrauchern von elektrischer Energie oder elektrischen Signalen bzw. von Medien führen. Dabei kann es sich sowohl um elektrische Ströme und Signale handeln, die der Bewegung des Schlittens 8 dienen, als auch um solche, die für die Bewegung des Roboters 7 sowie für die Speisung und Ansteuerung der Lackspritzpistole 6 erforderlich sind.

Als medienführende Leitungen kommen primär Leitungen zur Zuführung der Farbe, Leitungen zur Zuführung von Lösemitteln und Leitungen zur Zuführungen von Druckluft in Frage. Die Zahl der farbführenden Leitungen hängt von der eingesetzten Technik ab: Im einfachsten Falle stimmt die Zahl von farbführenden Verbindungsleitungen mit der Zahl von Farben überein, die in der Lackspritzkabine 1 verarbeitet werden. Beim Einsatz der sog. "Molchtechnik", die dem Fachmann bekannt ist und hier nicht näher beschrieben zu werden braucht, kann die Zahl der farbführenden Leitungen erheblich reduziert werden.

In jedem Falle ist die Gesamtzahl von Leitungen, die zwischen den feststehenden Anschlußpunkten 40a, 40b und den vom Schlitten 8 mitgeführten Anschlußpunkten 41a, 41b verlaufen, recht hoch. Um zu vermeiden, daß die Medienführungskette zur Unterbringung all dieser Leitungen eine zu große Breite (also in Richtung senkrecht zur Transportrichtung des Schlittens 8) benötigt, sind in der in den Figuren 1 und 2 dargestellten Weise zwei Medienführungsketten 12a, 12b vorgesehen, welche nicht nebensondern übereinander angeordnet sind. In den Figuren 1
und 2 sind die beiden Medienführungsketten 12a, 12b ineinander verschachtelt, derart, daß im wesentlichen die einander benachbarten Trums der beiden Medienführungsketten 12a, 12b zumindest über eine gewisse Strecke aneinander anliegen.

Die Maschinensteuerung, welche die Übertragung elektrischer Energie, elektrischer Signale und verschiedener Medien von den ortsfesten Anschlußpunkten 40a, 40b zu den vom Schlitten 8 mitgeführten Anschlußpunkten 41a, 41b steuert, ist in der Nähe der ortsfesten Anschlußpunkte 40a, 40b in dem Nebengehäuse 11 untergebracht (nicht dargestellt).

Die von den Medienführungsketten 12a, 12b und von den in diesen gehaltenen Verbindungsleitungen gebildete Schleife ist so groß, daß der Schlitten 8 im Betrieb der Lackspritzkabine 1 über die volle Länge der Führungsstruktur 9 verfahren werden kann.

Die gesamte Führungsstruktur 9 ist an ihrer nach innen und nach oben weisenden Seite durch ein Abdeckblech 31 geschützt, welches gleichzeitig das Eindringen von Verunreinigungen wie Farbnebel in das Innere des Nebengehäuses 11 verhindert. Ein weiteres Abdeckblech 32 ist mit seinem oberen Rand an der Innenseite der Kabinenwand 5 oberhalb des spaltartigen Zugangs 10 befestigt und erstreckt sich so weit nach unten, daß es das untere Abdeckblech 31 seitlich überlappt. Um zu verhindern, daß durch den Spalt zwischen den beiden Abdeckblechen 31, 32 Schmutz in das Nebengehäuse 11 eindringen kann, wird der Innenraum des Nebengehäuses 11 auf einem höheren Druck als der Innenraum der Lackspritzkabine 1 gehalten.

Im Betrieb der oben beschriebenen Lackspritzkabine 1 werden die Fahrzeugkarosserien 2, wie schon beschrieben, intermittierend oder kontinuierlich senkrecht zur Zeichenebene der Figuren 1 und 2, beispielsweise nach oben, bewegt. Während dieser Bewegung oder im Stillstand werden die Fahrzeugkarosserie 2 mit Hilfe der Lackspritzpistole 6 beschichtet, die unter Ausnutzung der sieben Achsen des Roboters 7 so bewegt wird, daß alle zu lackierenden Bereiche der Fahrzeugkarosserie 2 erreicht werden, wobei der günstigste Abstand zwischen Spritzpistole 6 und Fahrzeugkarosserie 2 sowie die jeweils günstigste Orientierung des Farbnebels eingestellt werden. Dabei kann der Roboter 7 entlang seiner durch die Führungsstruktur 9 vorgegebenen "siebten Achse" verfahren werden, entweder, um bei stillstehender Fahrzeugkarosserie 2 an dieser in horizontaler Richtung entlang zu lackieren, oder um die sich bewegende Fahrzeugkarosserie 2 zu verfolgen.

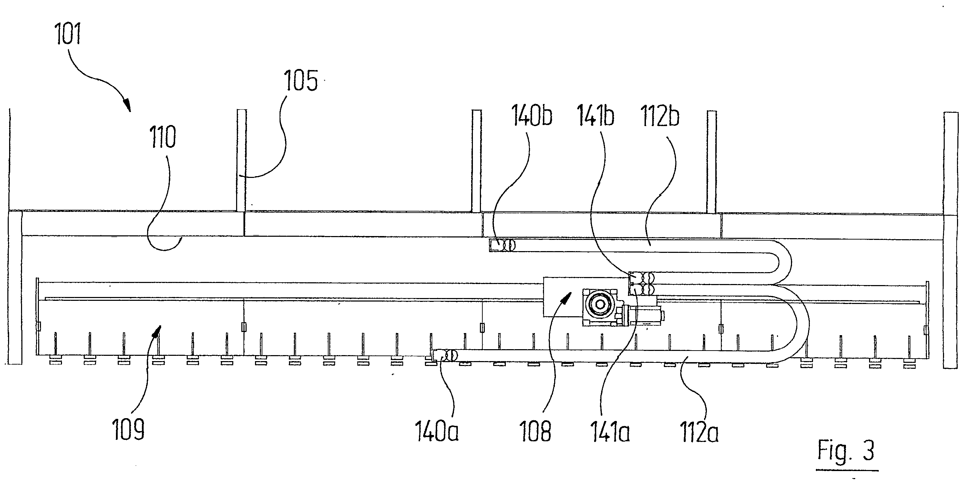

Das in Figur 3 dargestellte Ausführungsbeispiel einer Lackspritzkabine ähnelt dem oben anhand der Figuren 1 und 2 beschriebenen stark; entsprechende Teile sind daher mit demselben Bezugszeichen zuzüglich 100 gekennzeichnet.

Der wesentliche Unterschied zwischen dem Ausführungsbeispiel der Figuren 1 und 2 einerseits und demjenigen der Figur 3 andererseits besteht darin, daß bei letzterem die beiden Medienführungsketten 112a, 112b nicht ineinander verschachtelt sind. Vielmehr verläuft die untere Medienführungskette 112a von dem im unteren Bereich der Führungsstruktur 109 angeordneten ortsfesten Anschlußpunkt 140a in einer (einfachen) Schleife zum vom Schlitten 108 mitgeführten Anschlußpunkt 141a. Die obere Medienführungskette 112b dagegen erstreckt sich durchgängig oberhalb der ersten Medienführungskette 112a von einem oberhalb der Führungsstruktur 109 befindlichen, mit dem Gehäuse fest verbundenen Anschlußpunkt 140b zu dem vom Schlitten 108 mitgeführten Anschlußpunkt 141b. Die benachbarten Trums der beiden Medienführungsketten 112a, 112b liegen dabei über eine gewisse Erstreckung hinweg aneinander an.

Auch bei dem in Figur 3 dargestellten Ausführungsbeispiel befindet sich die Steuerung in der Nähe der ortsfesten Anschlußpunkte 140a, 140b im Nebengehäuse.

Die obere Medienführungskette 112b haltert und ordnet ausschließlich elektrische Verbindungsleitungen, während durch die untere Medienführungskette 112a die gas-, partikel- oder flüssigkeitsführenden Verbindungsleitungen gelegt sind. Auf diese Weise wird vermieden, daß bei einer Undichtigkeit oder einem Bruch einer der letztgenannten Verbindungsleitungen das darin geführte Medium nach unten auf Strom führende Verbindungsleitungen herabtropft oder fließt.

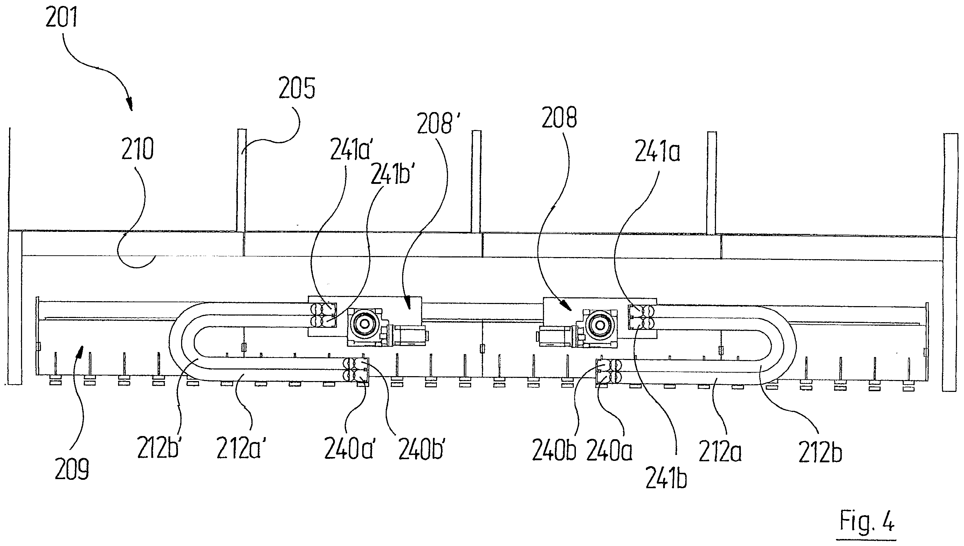

Während bei den oben anhand der Figuren 1 bis 3 beschriebenen Ausführungsbeispielen jeweils nur ein Schlitten 8 bzw. 108 mit einem entsprechenden Roboter 7 entlang der Führungsstruktur 9; 109 verfahrbar war, sind bei dem Ausführungsbeispiel der Figur 4, in dem entsprechende Teile um erneut 100 erhöhte Bezugszeichen tragen, zwei Roboter tragende Schlitten 208, 208' vorgesehen.
Die von den Schlitten 208, 208' mitgeführten Anschlußpunkte 241a, 241b bzw. 241a', 241b' sind in derselben Weise über zwei miteinander verschachtelte, in Schleifen gelegte Medienführungsketten 212a, 212b, 212a', 212b' mit den ortsfesten Anschlußpunkten 240a, 240b bezw. 240a', 240b' verbunden. D. h., daß die Medienführungsketten 212a, 212b bzw. 212a', 212b' ineinander verschachtelt, aneinander anliegend in Schleifen gelegt sind. Die entsprechenden Schleifen zeigen jedoch für die beiden Schlitten 208, 208' in entgegengesetzte Richtungen.

Die Schlitten 208, 208' können jeweils in dem Ausmaße
auf der Führungsstruktur 209 verfahren werden, in dem diese von dem jeweils anderen Schlitten 208, 208' nicht blockiert ist. Die Gesamtsteuerung der Anlage sorgt dafür, daß sich die Schlitten 208, 208' immer nur in entsprechendem Ausmaße bewegen.

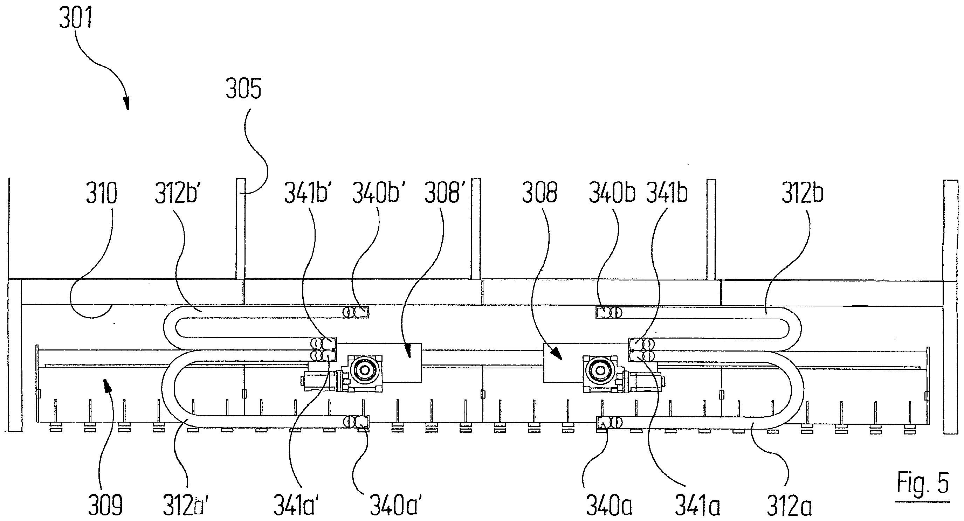

Auch beim Ausführungsbeispiel der Figur 5, das erneut
um 100 erhöhte Bezugszeichen aufweist, sind zwei Lackierroboter tragende Schlitten 308, 308' auf derselben Führungsstruktur 309' verfahrbar mit den geometrischen Einschränkungen der Verfahrstrecke, die oben beim Ausführungsbeispiel der Figur 4 schon angemerkt wurden. In Figur 5 sind die Medienführungsketten 312a, 312b bzw. 312a', 312b' in derselben Weise wie in Figur 3 verlegt, wobei erneut die Schleifen der Medienführungsketten 312a, 312b bzw. 312a', 312b' in entgegengesetzte Richtungen zeigen.

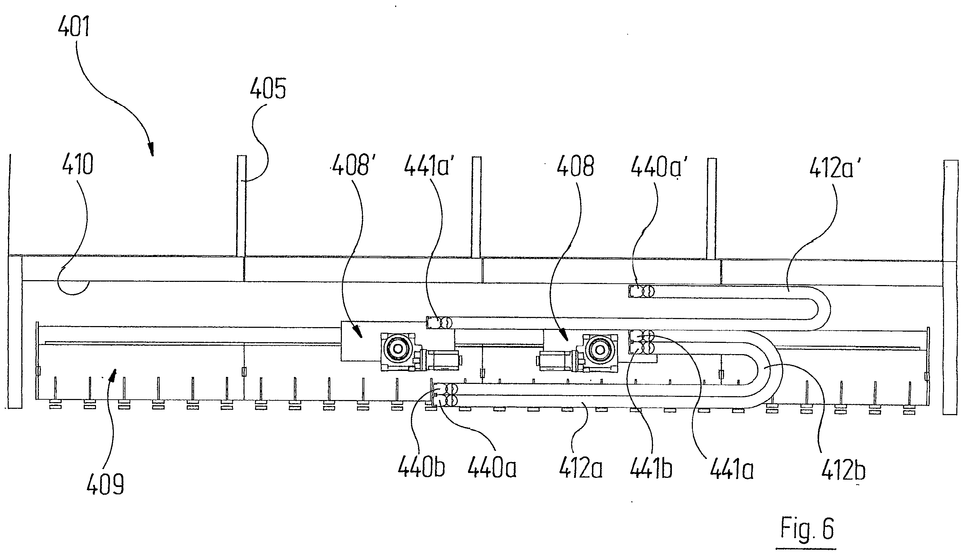

Beim Ausführungsbeispiel der Figur 6, das mit erneut
um 100 erhöhten Bezugszeichen versehen ist, verfahren auf ein und derselben Führungsstruktur 409 ein Schlitten 408, der einen Lackierroboter trägt, sowie ein Schlitten 408', mit dem ein sog. Handhabungsroboter verschoben wird. Handhabungsroboter in Lackspritzkabinen dienen im allgemeinen dazu, bestimmte Teile der zu lackierenden Fahrzeugkarosserien, z. B. Türen, zu bewegen, so daß sie von dem von der Lackspritzpistole abgegebenen Lacknebel an allen Flächen gut erreicht werden.

Wie Figur 6 deutlich macht, ist der den Lackierroboter tragende Schlitten 408 ähnlich wie in Figur 2 über zwei Medienführungsketten 412a, 412b angeschlossen, während der den Handhabungsroboter tragende Schlitten 408' über eine einzige Medienführungskette 412a' mit einem ortsfesten Anschlußpunkt 440a' verbunden ist. Die Medienführungskette 412a' liegt entlang eines Teils ihres untern Trums an der Oberseite des oberen Trums der Medienführungskette 412a an, biegt jedoch rechts in Figur 6 nach oben in ihr oberes, mit dem Anschlußpunkt 440a' verbundenes Trum um.

Selbstverständlich unterliegt die Bewegung der beiden Roboter tragenden Schlitten 408, 408' in Figur 6 wieder denselben Einschränkungen, die sich aus der Tatsache ergeben, daß beide auf derselben Führungsstruktur 409 verfahren. Gerade bei der Kombination von Lackierroboter tragenden und Handhabungsroboter tragenden Schlitten sind derartige Einschränkungen in der Beweglichkeit problemlos möglich.

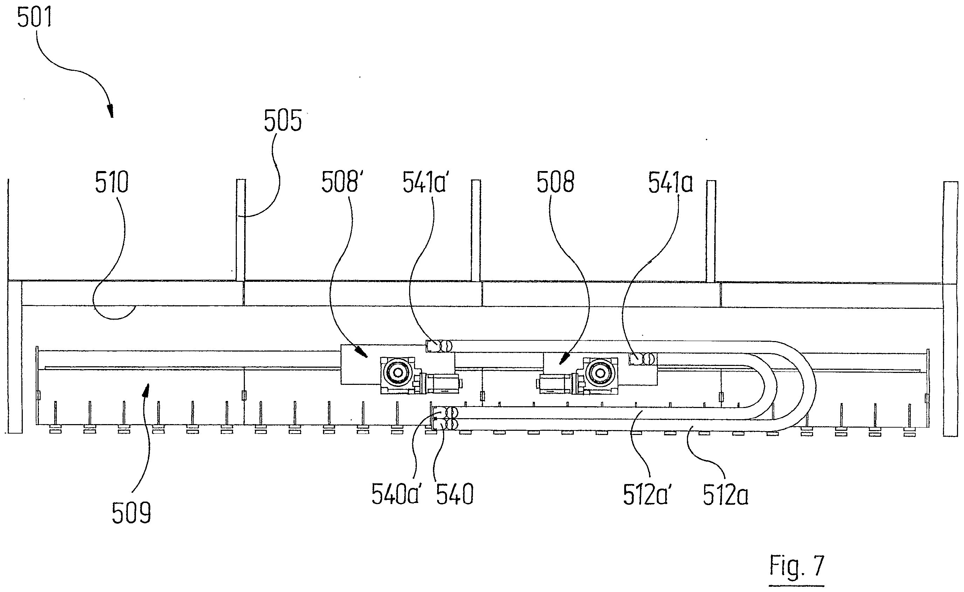

Auch Figur 7 zeigt ein Ausführungsbeispiel einer Lackspritzkabine 501 (erneut wurden die Bezugszeichen um 100 erhöht), bei dem sich auf einer einzigen Führungsstruktur 509 ein einen Lackierroboter tragender Schlitten 508 und ein einen Handhabungsroboter tragender Schlitten 508' bewegen. Beide Schlitten 508, 508' sind jeweils über eine einzige, in eine Schleife gelegte Medienführungskette 512a, 512a' mit den ortsfesten Anschlußpunkten 540a, 540a' verbunden. Die beiden Medienführungsketten 512a, 152a' sind ähnlich wie beim Ausführungsbeispiel der Figur 2 ineinander verschachtelt in der Weise, daß ihre horizontal verlaufenden Trums jeweils über einen Teil ihrer Erstrekkung hinweg an einem benachbarten Trum der jeweils anderen Medienführungskette 512a, 512a' anliegt.

## Patentansprüche

1. Vorrichtung zum Beschichten, insbesondere zum Lackieren von Gegenständen, insbesondere von Fahrzeugkarosserien, mit
a) einem mehrachsigen, eine Applikationseinrichtung tragenden Roboter;
b) einem den Roboter tragenden verfahrbaren Schlitten (408; 508);
c) einem Handhabungsroboter;
d) einem den Handhabungsroboter tragenden Schlitten (408'; 508'),
e) einer Führungsstruktur (409; 509), entlang welcher die Schlitten (408, 408'; 508, 508') verfahrbar sind;
f) mindestens einer Medienführungskette (412a, 412b; 512a, 512a'), die eine Vielzahl von medienführenden Leitungen oder eine Vielzahl von elektrischen und medienführenden Leitungen trägt;
wobei
g) diese Medienführungskette (412a, 412b; 512a, 512a') dem den Roboter tragenden Schlitten (408; 508) zugeordnet ist und eine weitere Medienführungskette (412a, 412b; 512a, 512a') dem den Handhabungsroboter tragenden Schlitten (408'; 508') zugeordnet ist;
h) jede der zwei Medienführungsketten (412a, 412b; 512a, 512a') sich in einer zwei Trums aufweisenden Schleife von jeweils einem ortsfesten Anschlusspunkt zu einem von dem jeweiligen Schlitten mitgeführten Anschlusspunkt erstreckt;
i) die Trums der zwei Medienführungsketten (412a, 412b; 512a, 512a') übereinander angeordnet sind.
**dadurch gekennzeichnet, dass**
j) die zwei Medienführungsketten (512a, 512a') ineinander verschachtelt sind;
oder
k) eine der zwei Medienführungsketten (412a') mit beiden Trums oberhalb beider Trums der anderen der zwei Medienführungsketten (412a, 412b) angeordnet ist.

2. Vorrichtung nach Anspruch 1, **dadurch gekennzeichnet, dass** mindestens zwei Medienführungsketten dem den Roboter tragenden Schlitten (408) zugeordnet sind, von denen eine die Medienführungskette (412a, 412b) nach Anspruch 1, Merkmal f) ist.

3. Vorrichtung nach einem der vorhergehenden Ansprüche, **dadurch gekennzeichnet, dass** benachbarte Trums der beiden Medienführungsketten (412a, 412b; 512a, 512a') nach Anspruch 1, Merkmal g) zumindest bereichsweise aneinander anliegen.

## Claims

1. Device for coating, in particular for painting objects, in particular vehicle bodies, comprising:
a) one multi-axis robot which supports an application device;
b) one traversable carriage (408; 508) which supports the robot;
c) one handling robot;
d) one carriage (408'; 508') which supports the handling robot;
e) a guide structure (409; 509) along which the carriages (408, 408'; 508, 508') are traversable;
f) at least one media guide chain (412a, 412b; 512a, 512a') which carries a multiplicity of media-conducting lines or a multiplicity of electric and media-conducting lines;
wherein
g) this media guide chain (412a, 412b; 512a, 512a') is associated with the carriage (408; 508) which supports the robot and another media guide chain (412a, 412b; 512a, 512a') is associated with the carriage (408', 508') which supports the handling robot;
h) each of the two media guide chains (412a, 412b; 512a, 512a') extends in a loop having two trums from a respective fixed connection point to a connection point carried along by the respective carriage;
i) the trums of the two media guide chains (412a, 412b; 512a, 512a') are arranged above one another,
**characterized in that**
j) the two media guide chains (512a, 512a') are nested inside one another;
or
k) one of the two media guide chains (412a') is, with both trums, arranged above both trums of the other of the two media guide chains (412a, 412b).

2. Device according to claim 1, **characterized in that** at least two media guide chains are associated with the carriage (408) which supports the robot, from which one is the media guide chain (412a, 412b) according to claim 1, feature f).

3. Device according to any one of the preceding claims, **characterized in that** adjacent trums of the two media guide chains (412a, 412b; 512a, 512a') according to claim 1, feature g) rest against one another at least partly.

## Revendications

1. Dispositif de revêtement, en particulier de peinture d'objets, en particulier de carrosseries de véhicules, comprenant
a) un robot multi-axe portant un dispositif d'application ;
b) un chariot mobile (408; 508) portant le robot ;
c) un robot de manipulation ;
d) un chariot mobile (408' ; 508') portant le robot de manipulation ;
e) une structure de guidage (409 ; 509) le long de laquelle les chariots (408, 408' ; 508, 508') sont mobiles ;
f) au moins une chaîne de guidage de milieux (412a, 412b ; 512a, 512a') qui porte une pluralité de lignes conductrices de milieux ou une pluralité de lignes électriques et conductrices de milieux,
dans lequel
g) cette chaîne de guidage de milieux (412a, 412b ; 512a, 512a') est associée au chariot (408 ; 508) portant le robot et une autre chaîne de guidage de milieux (412, 412b ; 512a, 512a') est associée au chariot (408' ; 508') portant le robot de manipulation ;
h) chacune des deux chaînes de guidage de milieux (412a, 412b ; 512a, 512a') s'étend en une boucle présentant deux brins, respectivement d'un point de raccordement fixe à un point de raccordement entraîné par le chariot respectif ;
i) les brins des deux chaînes de guidage de milieux (412a, 412b ; 512a, 512a') sont disposés les uns au-dessus des autres,
**caractérisé en ce que**
j) les deux chaînes de guidage de milieux (412a, 412b ; 512a, 512a') sont entrelacées ;
ou
k) un des deux chaînes de guidage de milieux (412') est disposée avec ses deux brins au-dessus des deux brins de l'autre chaîne de guidage de milieux (412a, 412b).

2. Dispositif selon la revendication 1, **caractérisé en ce qu'**au moins deux chaînes de guidage de milieux sont associées au chariot (408) portant le robot, dont l'une est la chaîne de guidage de milieux (412a, 412b) selon la revendication 1, caractéristique f).

3. Dispositif selon l'une des revendications précédentes, **caractérisé en ce que** les brins adjacents des deux chaînes de guidage de milieux (412a, 412b ; 512a, 512a') selon la revendication 1, caractéristique g), sont appliqués l'un contre l'autre au moins dans certaines zones.
